# FASCICULE DE BREVET EUROPEEN

(11) **EP 1 227 941 B1**
(45) Date de publication et mention de la délivrance du brevet: **29.12.2004**
(21) Numéro de dépôt: 00974392.3
(22) Date de dépôt: 13.10.2000
(51) Int. Cl.: B60C 11/04, B60C 11/13, B60C 11/11

(54) **SCULPTURE DE BANDE DE ROULEMENT POUR PNEUMATIQUE DE VEHICULE A FORTE CAPACITE DE CHARGE**
REIFENLAUFFLÄCHENPROFIL FÜR FAHRZEUGE MIT HOHER BELASTUNGSFÄHIGKEIT
PROFILE FOR MOTOR VEHICLE TYRE TREAD WITH HIGH LOAD CAPACITY

(30) Priorité: 29.10.1999 FR 9913696
(43) Date de publication de la demande: 07.08.2002
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: COMPS, Olivier, F-63122 CEYRAT (FR)
(74) Mandataire: Diernaz, Christian
(86) Numéro de dépôt international: PCT/EP2000/010116
(87) Numéro de publication internationale: WO 2001/032448

(56) Documents cités:
- WO-A-97/27070
- GB-A- 755 137
- US-A- 2 056 131

## Description

L'invention concerne les sculptures de bandes de roulement pour pneumatiques destinés à équiper des véhicules de très forte capacité de charge et roulant en particulier dans des carrières ou chantiers, comme des camions bennes, et les véhicules appelés "dumper".

Les véhicules concernés présentent une bande de roulement dont l'épaisseur permet la réalisation de découpures (rainures et / ou incisions) de profondeur au moins égale à **60** mm.

Dans le cadre du présent document, on entend par rainure, une découpure moulée dans la bande de roulement et délimitée par des parois de gomme, la largeur moyenne séparant lesdites parois étant au moins égale à **15** mm; la trace d'une rainure sur la surface de roulement peut présenter une largeur variable. Par incision, on entend une découpure de largeur inférieure à **15** mm.

Il est d'usage de réaliser des bandes de roulement comportant une pluralité de découpures orientées circonférentiellement et transversalement, certaines desdites découpures débouchant dans au moins une autre découpure d'orientation différente. Le document GB 755 137 montre par exemple une telle bande de roulement.

Au cours des roulages sur des sols présentant de nombreux cailloux, on a constaté que certaines régions d'une sculpture de pneumatique présentaient une sensibilité accrue à la capture et à la rétention de cailloux et objets divers. En particulier, dans le cas d'une découpure débouchant dans une autre découpure d'orientation différente, sans pour autant la traverser totalement, on a observé que la région du raccordement en forme de **"T"** était, comparativement aux découpures elles-mêmes, plus sensible à la rétention de cailloux.

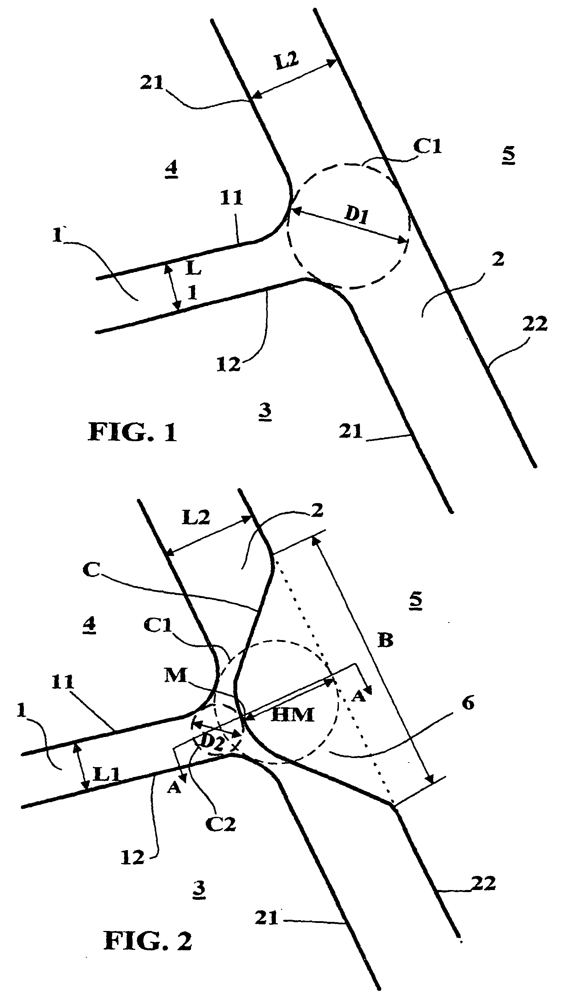

En effet, et comme cela est montré sur la figure **1**, on constate que dans la région de raccordement en **T** entre deux découpures, la taille maximale des cailloux pouvant être capturés (représentés par un cercle) est supérieure à la largeur moyenne de chaque découpure. Bien entendu, la taille réelle des cailloux pouvant effectivement être capturés est plus grande que celle qui est simulée compte tenu de la faible rigidité des coins des motifs de sculpture.

On observe qu'un caillou ayant une forme sensiblement sphérique et de diamètre égal à la taille maximale décrite va pouvoir être capturé dans ces zones de raccordement en **T** et ne pourra pas s'échapper par migration vers l'une ou l'autre des découpures de largeur moindre (tout se passe comme si ce caillou était de plus en plus comprimé entre les parois de gomme des motifs de sculpture).

Il est connu dans les pneumatiques pour véhicules poids lourd de disposer, au fond des découpures, des plots de gomme faisant saillie sur le fond desdites découpures pour diminuer la capture de certains cailloux en les empêchant de rentrer dans les découpures, voire de les éjecter si toutefois ils avaient pu y pénétrer. L'application de cette solution aux bandes de roulement ayant des découpures de grande profondeur (au moins égale à **60** mm) conduit à réaliser des plots de grande taille; un inconvénient réside dans le fait que ces plots présentent une rigidité insuffisante pour remplir la fonction désirée compte tenu des efforts très élevés auxquels sont soumis les véhicules à très forte capacité de charge. Une possibilité consiste à prévoir des plots de gomme de volume important pour obtenir une rigidité satisfaisante; toutefois, cette solution présente l'inconvénient de requérir une grande quantité de gomme supplémentaire. Le document US 2 056 131 montre une sculpture de bande de roulement dont les parois des découpures comportent des saillies uniformément réparties.

D'autre part, il faut remarquer que pour les pneumatiques concernés, le besoin de disposer d'un moyen pour éviter la capture de cailloux ne se fait sentir que pour le pneumatique neuf et jusqu'à un état d'usure correspondant sensiblement à la moitié de l'épaisseur de la bande de roulement.

L'objectif de l'invention est de diminuer la sensibilité à la pénétration et à la rétention de cailloux dans la région de raccordement en **T** formée par deux découpures d'une sculpture de bande de roulement, l'une desdites découpures débouchant dans l'autre découpure sans la traverser complètement et ceci lorsque le pneumatique est à l'état neuf et jusqu'à une usure sensiblement égale à mi-profondeur des rainures.

La bande de roulement selon l'invention comporte des éléments de relief formés par au moins une première et une deuxième découpures orientées différemment, la première découpure étant délimitée par une première et une seconde parois de gomme espacées d'une distance moyenne **L1,** la deuxième découpure étant délimitée par une première et une seconde parois de gomme espacées d'une distance moyenne **L2.** La première découpure débouche dans la deuxième découpure sans la traverser pour former une région de raccordement en **T** de façon à ce que les première et seconde parois délimitant la première découpure se raccordent avec la première paroi délimitant la deuxième découpure.

La sculpture de la bande de roulement selon l'invention est caractérisée en ce que la seconde paroi de la deuxième découpure est pourvue, dans la région de raccordement, d'une saillie s'étendant sensiblement dans une direction voisine de la direction de la première découpure, cette saillie présentant, sur une surface parallèle à la surface de roulement, un contour dont le point le plus éloigné de la seconde paroi est à une distance au moins égale à **50**% de la largeur **L2** de la deuxième découpure de façon à réduire le diamètre maximal d'un objet sphérique pouvant être introduit dans ladite région de raccordement, ladite saillie s'étendant entre **30**% et **60**% de la profondeur de la rainure dans laquelle elle est localisée.

Par définition, une première découpure débouche dans une deuxième découpure sans la traverser quand cette première découpure interrompt une seule des parois de la deuxième découpure.

L'efficacité de chaque saillie selon l'invention est ainsi assurée pendant une grande partie de l'usage d'une bande de roulement à partir de l'état neuf. De plus, en limitant la profondeur maximale de chaque saillie à **60**% de la profondeur de la rainure dans laquelle elle est localisée, on augmente la performance de la sculpture vis-à-vis de la rétention de cailloux à l'état neuf sans perturber les performances de la sculpture après usure puisque les rainures sont en quelque sorte rétablies dans toute leur largeur ; en outre, les quantités de gomme supplémentaires formant chaque saillie sont réduites.

Le rôle de chaque saillie est de fermer en grande partie dans la direction radiale (c'est-à-dire suivant l'épaisseur de la bande de roulement) la zone la plus sensible à la pénétration de cailloux en réduisant la taille maximale des cailloux et objets divers pouvant être capturés, sans pour autant modifier de façon sensible la rigidité des éléments de sculpture délimités par lesdites découpures.

La saillie est préférentiellement prévue pour déboucher sur la surface de roulement à l'état neuf; toutefois, on peut envisager de la disposer légèrement en retrait sous la surface de roulement de la bande de roulement à l'état neuf (au maximum **15**% de la profondeur de rainure).

On comprendra mieux les caractéristiques et avantages de l'invention à la lecture de la description détaillée donnée ci-après en se référant au dessin et sur lequel :
la figure **1** montre une vue partielle d'une surface de roulement d'une bande de roulement au voisinage d'une région de raccordement en **T** entre deux découpures selon l'art antérieur;
la figure **2** montre une vue partielle d'une surface de roulement d'une bande de roulement au voisinage d'une région de raccordement en **T** entre deux découpures selon l'invention;
la figure **3** montre une coupe selon **A**-**A** réalisée dans l'épaisseur de la bande de roulement montrée à la figure **2**;
la figure **4** montre une variante de sculpture selon l'invention montrant une saillie de forme triangulaire;
la figure **5** montre une vue partielle d'une sculpture selon l'invention pour bande de roulement d'un pneumatique de dimension **44/80 R 57** pour véhicule de génie civil.

La figure **1** représente une vue partielle d'une bande de roulement au voisinage d'une région de raccordement en **T** de deux rainures **1**, **2** de largeur moyenne respectivement **L1** et **L2,** lesdites rainures se coupant à angle droit. La première rainure **1** est délimitée par une première paroi **11** d'un bloc de gomme **4** et par une seconde paroi **12** d'un deuxième bloc **3**. La deuxième rainure **2** est délimitée par une première paroi **21** bordant les éléments **3** et **4**, et par une seconde paroi **22** bordant un élément de gomme **5**. Dans la région de raccordement, la première paroi **11** et la seconde paroi **12** de la première rainure **1** se raccordent avec la première paroi **21** de la deuxième rainure **2**.

On a en outre représenté par un cercle **C1** de diamètre **D1** le contour d'un objet sphérique de taille maximale pouvant être introduit dans la région de raccordement en **T**. On constate aisément que ce diamètre est supérieur aux largeurs **L1** et **L2** des rainures **1** et **2**.

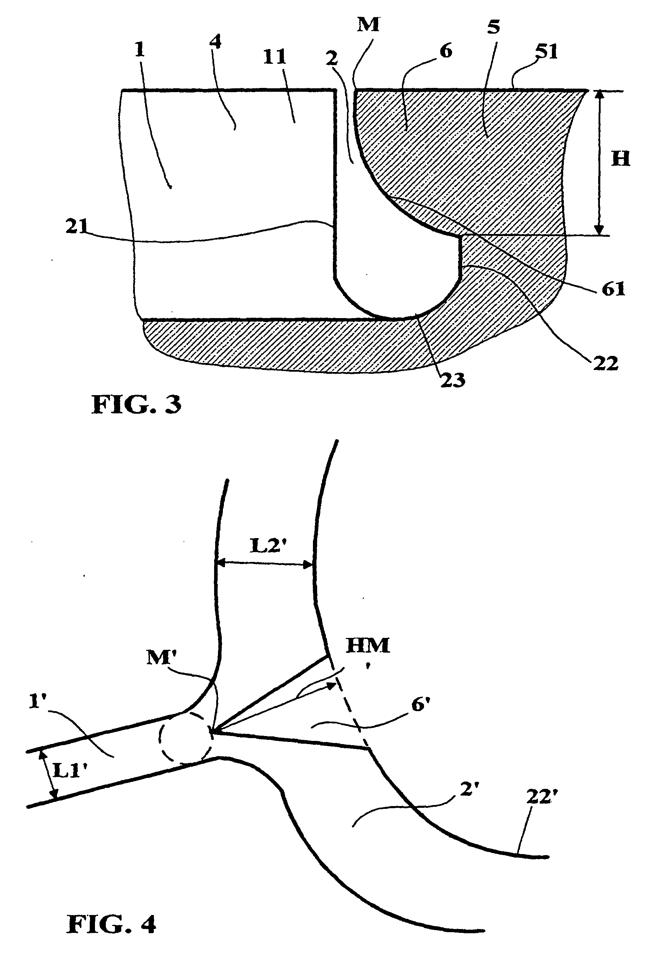

La figure **2** montre la même vue partielle de la même bande de roulement comportant la sculpture selon l'invention. On distingue en particulier que la seconde paroi **22** de la deuxième rainure **2** comporte une saillie de gomme **6** s'étendant sensiblement vers la première rainure **1** de façon à réduire localement la largeur de la deuxième rainure **2**. Cette saillie **6** a un contour **C** se raccordant de façon tangente avec le contour initial de la seconde paroi **22** de la deuxième rainure **2** (la distance **B** entre les points de raccordement du contour **C** de la saillie **6** avec la paroi **22** sans saillie étant, dans le cas présent, supérieure à la largeur **L1** de la première rainure **1**); le point **M**, dudit contour **C**, le plus éloigné de ladite seconde paroi **2** sans saillie (représentée en pointillés), est situé à au moins une distance **HM** égale à la largeur **L2** de la deuxième rainure.

De cette façon, la taille maximale d'un objet sphérique pouvant être introduit dans la région de raccordement peut être sensiblement réduite; cette taille maximale est d'autant plus réduite que le point M est éloigné de la seconde paroi **22** de la deuxième rainure **2.** Pour visualiser le gain obtenu, on a tracé en traits pointillés le cercle **C1** (déjà représenté sur la figure **1**) et un cercle **C2** simulant un objet sphérique de dimension maximale pouvant s'introduire dans la région de raccordement compte tenu de la présence de la saillie **6**. Il est clair que le diamètre **D2** de ce deuxième cercle **C2** est très inférieur au diamètre **D1** du cercle **C1.**

La figure **3** montre une vue selon la coupe **A-A** de la figure **2**. Sur cette coupe, on distingue la première paroi **11** de la première rainure **1** délimitant l'élément de gomme **4**, ainsi qu'une section transversale de la deuxième rainure **2** dans un plan de coupe passant par le point M du contour de la saillie **6** le plus éloigné de la paroi **22** de ladite deuxième rainure **2**. et dans l'épaisseur de la bande de roulement, la même région de raccordement en **T.** Le profil de la saillie comporte dans ce plan de coupe une partie curviligne **61** se raccordant avec la paroi **22** elle-même reliée à la première paroi **21** de la deuxième rainure **2** par une partie curviligne **23** formant le fond de ladite rainure. Cette partie curviligne **61** permet d'obtenir une réduction progressive de l'emprise de la saillie **6** dans la largeur de la rainure **2** au fur et à mesure de l'usure de la bande de roulement.

Dans l'exemple présenté, la saillie **6** comporte une partie de raccordement curviligne, mais il est également envisageable toute autre forme, par exemple rectiligne, disposée de manière à réduire progressivement l'emprise de la saillie **6** dans la largeur de la rainure **2**. Le point inférieur de raccordement de la saillie **6** est dans le cas présent situé à une distance **H** de la surface de roulement **51** de l'élément **5**; préférentiellement, cette distance **H** est comprise entre **30**% et **60**% de la profondeur de la deuxième rainure **2**.

La présence d'une saillie selon l'invention présente, outre la réduction de la taille maximale des objets pouvant s'introduire dans la région de raccordement en **T**, les avantages suivants :
- présence d'un moyen s'opposant à l'introduction de cailloux uniquement pendant que cela est particulièrement nécessaire (entre l'état neuf et un état correspondant à mi-usure de la bande de roulement);
- le volume de gomme supplémentaire des saillies est réduit au strict nécessaire;
- maintien de la fonction drainage de chacune des rainures étant donné qu'il n'y a pas fermeture desdites rainures et que les saillies ne s'étendent que sur une partie seulement de la hauteur des rainures;
- tout objet introduit dans la région de raccordement en **T** ainsi modifiée et se déplaçant vers l'une ou l'autre des rainures prolongeant cette région en **T** n'est pas retenu par les parois desdites rainures puisque la dimension maximale dudit objet est inférieure aux largeurs desdites rainures;
- pas de modification des raideurs des éléments de la sculpture.

À noter que les formes choisies pour la saillie permettent un moulage et un démoulage sans difficulté particulière pour l'homme du métier.

La figure **4** montre une région de raccordement en **T** formée par une première rainure **1'** débouchant dans une deuxième rainure **2**', l'une des parois **22**' délimitant la rainure **2**' étant pourvue d'une saillie **6**' s'étendant dans la direction de la rainure **1**' et ayant sur la surface de roulement un contour de forme triangulaire dont l'un des sommets **M'** est le point le plus éloigné de la paroi **22'** et est situé à une distance **HM'** supérieure à **100**% de la largeur de la rainure **2'**. Cette saillie ne s'étendant pas dans toute l'épaisseur de la bande de roulement, la fonction drainage est toujours assurée par la rainure **2**'. La base opposée audit sommet **M**' a une longueur sensiblement égale à la largeur **L1'** de la rainure **1**'.

La disposition selon l'invention est applicable au cas de régions de raccordement en **T** de deux rainures peu important laquelle desdites rainures qui est la plus large.

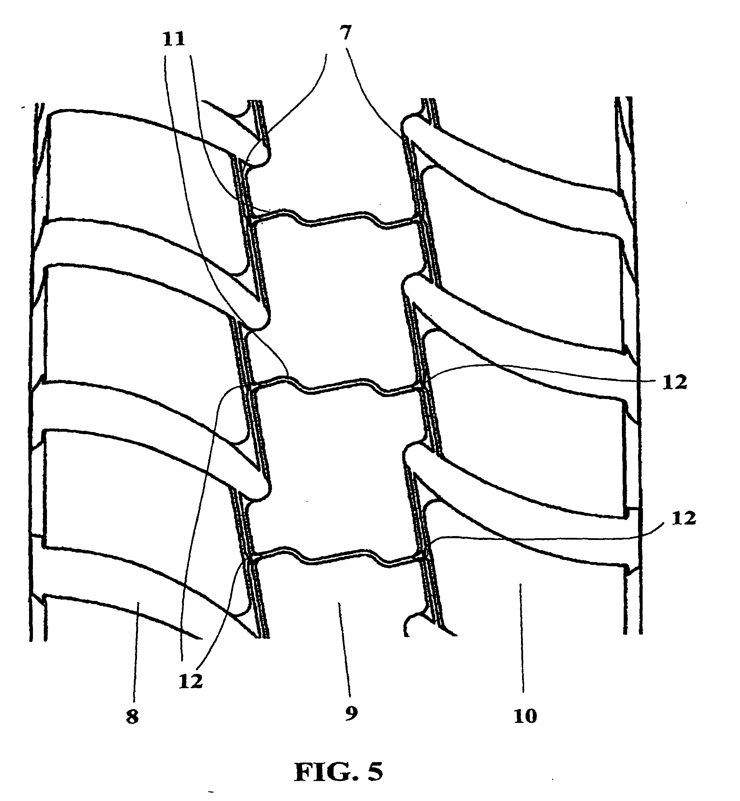

La figure **5** montre une vue partielle d'une sculpture d'une bande de roulement d'un pneumatique pour véhicule de génie civil de dimension **44/80 R 57** dont la profondeur de sculpture (c'est-à-dire la hauteur des éléments de gomme) est égale à **80** mm.

Cette sculpture comporte deux rainures **7**, d'orientation sensiblement circonférentielle et de largeur moyenne égale à **8** mm, délimitant trois bandes circonférentielles **8**, **9**, **10**, chacune de ces trois bandes circonférentielles présentant des arrangements de motifs de sculpture appropriés pour conférer à la bande de roulement des rigidités optimales permettant une mise à plat dans la partie en contact avec le sol.

En particulier, la bande centrale **9** est constituée d'une nervure pourvue d'une pluralité de rainures **11** de largeur moyenne égale à **8** mm et de profondeur **80** mm. Ces rainures **11** présentent deux ondulations et s'étendent suivant une direction moyenne sensiblement perpendiculaire à la direction circonférentielle ou longitudinale de la bande de roulement. Ces rainures **11** débouchent dans chacune des rainures circonférentielles **7** sans les traverser.

Suivant la présente invention, on réduit la sensibilité de la sculpture décrite en moulant, sur la paroi latérale des blocs de gomme des épaules faisant face aux rainures transversales **11** découpant la nervure centrale et en face de chacune desdites rainures transversales, une saillie **12** s'étendant principalement dans la direction transversale de manière à réduire localement la largeur de la rainure longitudinale **7** sans pour autant modifier la rigidité de mise à plat de la bande de roulement dans le sens transversal.

Dans le cas présenté à la figure **5**, les motifs de sculpture présentent, à l'état neuf, des arêtes biseautées le long des rainures circonférentielles et chaque saillie **12** est décalée d'une distance de **5** mm sous la surface de roulement correspondant à la hauteur du biseau. Chaque saillie **12** s'étend sur **60**% de la profondeur de la rainure circonférentielle **7** et présente un contour s'étendant sensiblement dans la direction de la rainure transversale **11** jusqu'à une distance légèrement supérieure à la largeur de la rainure circonférentielle **7**.

## Revendications

1. Bande de roulement pour pneumatique destiné à équiper un véhicule de forte capacité de charge roulant sur des chaussées accidentées pourvue d'une sculpture comportant des éléments de relief (**3**, **4**, **5**) formés par au moins une première et une deuxième découpures (**1**, **2**) orientées différemment, la première découpure (**1**) étant délimitée par une première et une seconde parois de gomme (**11**, **12**) espacées d'une distance moyenne **L1**, la deuxième découpure (**2**) étant délimitée par une première et une seconde parois de gomme (**21**, **22**) espacées d'une distance moyenne **L2**; la première découpure (**1**) débouchant dans la deuxième découpure (**2**) sans la traverser pour former une région de raccordement en **T** de façon à ce que les première et seconde parois (**11**, **12**) délimitant la première découpure (**1**) se raccordent avec la première paroi (**21**) délimitant la deuxième découpure (**2**); la sculpture de la bande de roulement selon l'invention étant **caractérisée en ce que** la seconde paroi (**22**) de la deuxième découpure (**2**) est pourvue, dans la région de raccordement, d'une saillie (**6**) s'étendant sensiblement dans une direction voisine de la direction de la première découpure (**1**), cette saillie (**6**) présentant, sur une surface parallèle à la surface de roulement (**51**), un contour C dont le point M le plus éloigné de la seconde paroi (**22**) est à une distance HM au moins égale à **50**% de la largeur **L2** de la deuxième découpure (**2**), la saillie (**6**) s'étendant dans le sens de la profondeur de la deuxième rainure (**2**) à partir de la surface de roulement (**51**) à l'état neuf et sur une profondeur **H** comprise entre **30**% et **60**% de la profondeur de ladite rainure, de façon à réduire le diamètre maximal d'un objet sphérique pouvant être introduit dans ladite région de raccordement.

2. Bande de roulement selon la revendication 1 **caractérisée en ce qu'**au moins une saillie (**6**) est, à l'état neuf de la bande, décalée dans le sens de la profondeur de la bande par rapport à la surface de roulement (**51**) de ladite bande, le décalage initial étant compris entre **0** et **15**% de la profondeur de la deuxième rainure (**2**).

3. Bande de roulement selon la revendication **1** ou la revendication **2 caractérisée en ce que** , dans un plan de coupe perpendiculaire à la surface de roulement (**51**) et passant par le point **M** de la saillie (6) le plus éloigné de la paroi de la découpure portant cette saillie, ladite saillie a une trace (**61**) inclinée par rapport à une direction perpendiculaire à ladite surface de roulement (**51**), de façon à ce que cette saillie s'étende de moins en moins dans la largeur de la deuxième rainure (**2**) au fur et à mesure de l'usure de la bande.

4. Pneumatique destiné à équiper un véhicule de forte capacité de charge **caractérisé en ce qu'**il est pourvu d'une bande de roulement définie selon l'une des revendications **1** à **3**.

5. Pneumatique destiné à équiper un véhicule de forte capacité de charge comportant une bande de roulement pourvue d'une sculpture comportant deux rainures d'orientation sensiblement circonférentielle de largeur moyenne **L1** délimitant deux bandes circonférentielles latérales encadrant une troisième bande centrale, la bande centrale étant constituée d'une nervure pourvue d'une pluralité de rainures de largeur moyenne **L2** et s'étendant dans une direction perpendiculaire à la direction circonférentielle, ces rainures débouchant dans chacune des rainures circonférentielles sans les traverser en totalité pour former une pluralité de régions de raccordement en **T**, la sculpture étant **caractérisée en ce que**, en face de chacune desdites rainures transversales de la bande centrale, il est moulé sur les parois latérales des bandes latérales, une saillie s'étendant principalement dans la direction transversale de manière à réduire localement la largeur de la rainure longitudinale d'au moins **50**% au moins à l'état neuf, chaque saillie s'étendant dans le sens de la profondeur des rainures d'orientation circonférentielle à partir de la surface de roulement à l'état neuf et sur une profondeur comprise entre **30**% et **60**% de la profondeur desdites rainures, sans pour autant modifier la rigidité de mise à plat de la bande de roulement au cours du roulage.

## Claims

1. A tread for a tyre intended to be fitted on a vehicle of high loading capacity which travels on bumpy roadways, provided with a tread pattern comprising elements in relief (3, 4, 5) formed by at least one first and one second cutout (1, 2) which are oriented differently, the first cutout (1) being defined by a first and a second rubber wall (11, 12) spaced apart by an average distance L1, the second cutout (2) being defined by a first and a second rubber wall (21, 22) spaced apart by an average distance L2; the first cutout (1) opening into the second cutout (2) without crossing it to form a T-shaped connecting region such that the first and second walls (11, 12) defining the first cutout (1) connect with the first wall (21) defining the second cutout (2); the tread pattern according to the invention being **characterised in that** the second wall (22) of the second cutout (2) is provided, in the connecting region, with a protrusion (6) which extends substantially in a direction close to the direction of the first cutout (1), this protrusion (6) having, on a surface parallel to the running surface (51), a contour C, the point M of which which is farthest from the second wall (22) is at a distance HM at least equal to 50% of the width L2 of the second cutout (2), the protrusion (6) extending in the direction of the depth of the second groove (2) from the running surface (51) when new and over a depth H of between 30% and 60% of the depth of said groove, so as to reduce the maximum diameter of a spherical object which can be introduced into said connecting region.

2. A tread according to Claim 1, **characterised in that** at least one protrusion (6), when the tyre is new, is offset in the direction of the depth of the tread relative to the running surface (51) of said tread, the initial offset being between 0 and 15% of the depth of the second groove (2).

3. A tread according to Claim 1 or Claim 2, **characterised in that**, in a section plane perpendicular to the running surface (51) and passing through the point M of the protrusion (6) which is farthest from the wall of the cutout bearing this protrusion, said protrusion has a trace (61) which is inclined relative to a direction perpendicular to said running surface (51), such that this protrusion extends less and less into the width of the second groove (2) as the tread becomes worn.

4. A tyre intended to be fitted on a vehicle of high loading capacity, **characterised in that** it is provided with a tread defined according to one of Claims 1 to 3.

5. A tyre intended to be fitted on a vehicle of high loading capacity comprising a tread provided with a tread pattern comprising two grooves of substantially circumferential orientation of average width L1 defining two lateral circumferential strips surrounding a third central strip, the central strip being formed of a rib provided with a plurality of grooves of average width L2 and extending in a direction perpendicular to the circumferential direction, these grooves opening into each of the circumferential grooves without completely crossing them to form a plurality of T-shaped connecting regions, the tread pattern being **characterised in that**, opposite each of said transverse grooves of the central strip, there is moulded on the lateral walls of the lateral strips a protrusion which extends mainly in the transverse direction so as to reduce locally the width of the longitudinal groove by at least 50% at least when new, each protrusion extending in the direction of the depth of the grooves of circumferential orientation starting from the running surface when new and over a depth of between 30% and 60% of the depth of said grooves, without for all that modifying the rigidity of laying the tread flat during travel.

## Patentansprüche

1. Lauffläche für einen Luftreifen, der für ein auf unebenen Straßen fahrendes Fahrzeug mit großem Ladegewicht bestimmt ist, mit einem Profil, das Profilelemente (3, 4, 5) aufweist, die von mindestens einem ersten und einem zweiten Ausschnitt (1, 2) gebildet werden, die unterschiedlich ausgerichtet sind, wobei der erste Ausschnitt (1) von einer ersten und einer zweiten Gummiwand (11, 12) begrenzt wird, die einen mittleren Abstand L1 aufweisen, während der zweite Ausschnitt (2) von einer ersten und einer zweiten Gummiwand (21, 22) begrenzt wird, die einen mittleren Abstand L2 aufweisen, wobei der erste Ausschnitt (1) in den zweiten Ausschnitt (2) mündet, ohne ihn zu durchqueren, um eine T-förmige Anschlusszone zu bilden, so dass die den ersten Ausschnitt (1) begrenzende erste und die zweite Wand (11, 12) an die den zweiten Ausschnitt (2) begrenzende erste Wand (21) anschließen, wobei das Profil der erfindungsgemäßen Lauffläche **dadurch gekennzeichnet ist, dass** die zweite Wand (22) des zweiten Ausschnitts (2) in der Anschlusszone mit einem Vorsprung (6) versehen ist, der sich im wesentlichen in einer Richtung nahe der Richtung des ersten Ausschnitts (1) erstreckt, wobei dieser Vorsprung (6) auf einer Fläche parallel zur Lauffläche (51) einen Umriss C aufweist, dessen Punkt M, der am weitesten von der zweiten Wand (22) entfernt ist, sich in einem Abstand HM mindestens gleich 50% der Breite L2 des zweiten Ausschnitts (2) befindet, wobei der Vorsprung (6) sich in Richtung der Tiefe der zweiten Rille (2) ausgehend von der Lauffläche (51) im Neuzustand und über eine Tiefe H zwischen 30% und 60% der Tiefe der Rille erstreckt, um den maximalen Durchmesser eines kugelförmigen Gegenstands zu reduzieren, der in die Anschlusszone eingeführt werden kann.

2. Lauffläche nach Anspruch 1, **dadurch gekennzeichnet, dass** mindestens ein Vorsprung (6) im Neuzustand der Lauffläche in Richtung der Tiefe der Lauffläche bezüglich der Abrollfläche (51) der Lauffläche verschoben ist, wobei die ursprüngliche Verschiebung zwischen 0 und 15% der Tiefe der zweiten Rille (2) liegt.

3. Lauffläche nach Anspruch 1 oder 2, **dadurch gekennzeichnet, dass** in einer senkrecht zur Abrollfläche (51) und durch den Punkt M des Vorsprungs (6), der am weitesten von der diesen Vorsprung tragenden Ausschnittwand entfernt liegt, verlaufenden Schnittebene der Vorsprung einen Verlauf (61) hat, der in Bezug auf eine Richtung senkrecht zur Abrollfläche (51) geneigt ist, so dass dieser Vorsprung sich immer weniger in der Breite der zweiten Rille (2) erstreckt, je mehr die Abrollfläche abgenutzt wird.

4. Luftreifen, der zur Ausstattung eines Fahrzeugs mit großem Ladegewicht bestimmt ist, **dadurch gekennzeichnet, dass** er mit einer gemäß einem der Ansprüche 1 bis 3 definierten Lauffläche versehen ist.

5. Luftreifen zur Ausstattung eines Fahrzeugs mit großem Ladegewicht, der eine Lauffläche aufweist, die mit einem Profil versehen ist, das zwei Rillen mit im wesentlichen Umfangsausrichtung und einer mittleren Breite L1 aufweist, die zwei seitliche Umfangsbänder begrenzen, die ein drittes Mittelband umrahmen, wobei das Mittelband aus einer Rippe besteht, die mit mehreren Rillen einer mittleren Breite L2 versehen ist, die sich in einer Richtung senkrecht zur Umfangsrichtung erstrecken, wobei diese Rillen in jeder der Umfangsrillen münden, ohne sie vollständig zu durchqueren, um mehrere T-förmige Anschlusszonen zu bilden, wobei das Profil **dadurch gekennzeichnet ist, dass** gegenüber jeder der Querrillen des Mittelbands auf den Seitenwänden der Seitenbänder ein Vorsprung geformt ist, der sich hauptsächlich in Querrichtung erstreckt, um die Breite der Längsrille lokal um mindestens 50% zumindest im Neuzustand zu reduzieren, wobei jeder Vorsprung sich in Richtung der Tiefe der in Umfangsrichtung ausgerichteten Rillen ausgehend von der Abrollfläche im Neuzustand und über eine Tiefe zwischen 30% und 60% der Tiefe der Rillen erstreckt, ohne dadurch die Steifheit des Flachlegens der Lauffläche beim Fahren zu verändern.
